# EUROPEAN PATENT APPLICATION

(11) **EP 3 832 250 A1**
(43) Date of publication of application: **09.06.2021**
(21) Application number: 19213070.6
(22) Date of filing: 03.12.2019
(51) Int. Cl.: G01B 3/56, B43L 7/12, B25H 7/00

(54) **APPARATUS FOR ALTERABLE ACCURATE SETTING OF AN ANGLE BETWEEN TWO ELONGATED MEMBERS**

(71) Applicant: Leanders Bros AB, 82 895 Viksjöfors (SE)
(72) Inventor: Leanders, Jörgen, 82 895 Viksjöfors (SE)
(74) Representative: Ehrner & Delmar Patentbyrå AB

(57) **Abstract**

The present invention relates to an apparatus for alterable accurate setting an angle between a first elongated member (1) and a second elongated member (2) without any angular play between said elongated members. Said first and second elongated members (1, 2) having ends (5, 6) which are pivotally connected to each other. The end (5, 6) of one of said first and said second elongated member (1, 2) is provided with at least two biased means (11, 12) adapted to be received in and interengaged with at least two sockets (13, 14) provided at the end (5, 6) of said other of the first and the second elongated member (1, 2). Said at least two biased means (11, 12) being displaced +0.05 to +1.0 degrees relative to an imaginary centre point, and a centre point of each of said at least two sockets (13, 14) being displaced -0.05 to - 1.0 degrees relative to an imaginary centre point, or vice versa, said imaginary centre points being aligned with each other.

## Description

### Field of the invention

The present invention relates to an apparatus for alterable accurate setting an angle between two elongated members without any angular play between said elongated members, and said alterable accurate setting is repeatable several times without effecting said alterable accurate setting.

### Background of the invention

When performing woodworking, boards, planks, deals, and battens, for instance, below called planks, the planks are often cut off (sawed off) at different angle, most frequently at right angle (90 degrees) to the longitudinal direction of the planks, but also at different angels such as 45 degrees and 22,5 degrees, respectively, to the longitudinal direction of the planks.

To get the exact right angle, a carpenter often uses a set square. Generally, a set square is a hand tool consisting of two straight arms at a fixed right angle to each other. There are also different types of adjustable set squares, sliding bevels, and folding squares, for instance, which are often used by carpenters to cut off a plank at angles different than 90 degrees.

However, a common problem with adjustable set squares is how to set the angle between the two arms in an alterable accurate way. Ideally, the alterable accurate setting of the angle between the two arms should be made without any angular play between the arms and in a way which can be repeated several times without jeopardizing said alterable accurate setting, and preferably without using any further means than the carpenter's hands.

Most commonly, the angle between the two arms of an adjustable set square is set by tightening a screw holding the two arms together. This setting of the two arms is not particularly accurate and may change if the screw is unintentionally loosened.

Thus, the object of the invention is to achieve an apparatus by which the accuracy that a particular angle between two elongated members can be set in a repeatable/alterably way is improved without any angular play between said elongated members and without any further means than the hands of a person setting the angle.

According to the invention, this object is achieved by an apparatus for alterable accurate setting an angle between a first elongated member and a second elongated member, whereby said accurate setting can be repeated several times without any angular play between said elongated members and without effecting said accurate setting, said first and second elongated members having ends which are pivotally connected to each other by a pivot pin so as to form a fulcrum, characterized in that the end of one of said first and said second elongated member is provided with at least two biased means adapted to be received in and interengaged with at least two sockets provided at the end of said other of the first and the second elongated member, and that a centre point of each of said at least two biased means being displaced +0.05 to +1.0 degrees, preferably +0.1 to +0.5, most preferably about +0.2, relative to an imaginary centre point of each of said at least two biased means, and a centre point of each of said at least two sockets being displaced -0.05 to -1.0 degrees, -0.1 to -0.5 degrees, most preferably about -0.2, relative to an imaginary centre point of each of said at least two sockets, or vice versa, said imaginary centre point of each of said at least two biased means and said imaginary centre point of each of said at least two sockets being aligned with each other.

Other embodiments of the invention will be apparent from the accompanying dependent claims.

### Brief description of drawings

The invention will now be described by way of a non-limiting example with reference to the accompanying drawing, in which
- Fig. 1 is a view from above of a foldable set square provided with the apparatus according to the invention and shown with a measuring part set at 90 degrees relative to a handle,
- Fig. 2 is a sectional side view taken along line A-A in figure 1, and
- Fig. 3 is a view from above of the foldable set square provided with the apparatus according to the invention and shown with the measuring part set at 45 degrees relative to the handle.

### Description of preferred embodiments

In the description below the apparatus according to the invention is described and shown applied to a set square, but it is obvious to a man skilled in the art that the inventive apparatus can be applied to any device having two to each other hinged elongated members, the angel between which should be possible to set in an alterable accurate way without any angular play between said elongated members and be repeatable several times without effecting said alterable accurate setting.

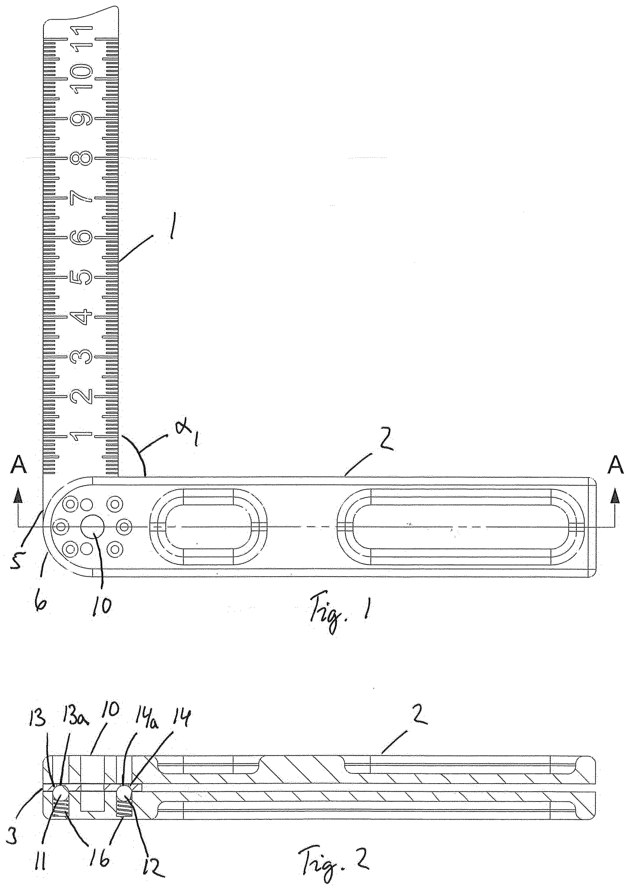

Figs. 1 to 3 show an apparatus according to the invention for alterable accurate setting an angle between a first elongated member/measuring part 1 and a second elongated member/handle 2 without any angular play between said first elongated member/measuring part 1 and said second elongated member/handle 2.

In the embodiment shown, the handle 2 is formed with a recess 3 at an end 5 thereof for receiving an end 6 of the measuring part 1. The end 5, 6 of the measuring part 1 and the handle 2, respectively, is pivotally connected to each other by a pivot pin 10 so as to form a fulcrum. The end 5, 6 of one of said measuring part 1 and said handle 2, in the embodiment shown the handle 2, is provided with at least two, preferably spaced, biased means 11, 12 adapted to be received in and interengaged with at least two, preferably spaced, sockets 13, 14 provided at the end 5, 6 of said other of the measuring part 1 and the handle 2, in the embodiment shown the measuring part 1.

A centre point of each of said at least two biased means 11, 12 is displaced +0.05 to +1.0 degrees, preferably +0.1 to +0.5, most preferably about +0.2 relative to an imaginary centre point of each of said at least two biased means 11, 12, and a centre point of each of said at least two sockets 13, 14 is displaced -0.05 to -1.0 degrees, -0.1 to -0.5 degrees, most preferably about -0.2, relative to an imaginary centre point of each of said at least two sockets 13, 14, or vice versa, said imaginary centre point of each of said at least two biased means 11, 12 and said imaginary centre point of each of said at least two sockets 13, 14 are aligned with each other.

Each of said biased means 11, 12 has at least a semispherically formed end 13a, 14a adapted to be received in the respective socket 13, 14 each of which has a shape corresponding to the semispherically formed end 13a, 14a, preferably each of said biased means 11, 12 is formed as a sphere 11, 12 and each being biased by a spring 16 into respective socket 13, 14.

A depth of the sockets 13, 14 is within the interval of 10% to 40% of a diameter of said at least semispherically formed end 13a, 14a of each of said biased means 11, 12.

When turning the measuring part 1 relative to the handle 2 the semispherically formed ends 13a, 14a slide on a flat surface of the end 5 of the measuring part 1, and when the angle to be set is reached said semispherically formed ends 13a, 14a are biased into and engage in said sockets 13, 14.

The biasing force of the biased means 11, 12/the spring 16 are so chosen that a distinct setting is achieved without any angular play, whereby a relatively large force is required to force the measuring part 1 to move relative the handle 2.

The number of said biased means 11, 12 is always the same as the number of said sockets 13, 14, but the number of said biased means 11, 12/said sockets 13, 14 is dependent upon the angle to be set between the measuring part 1 and the handle 2.

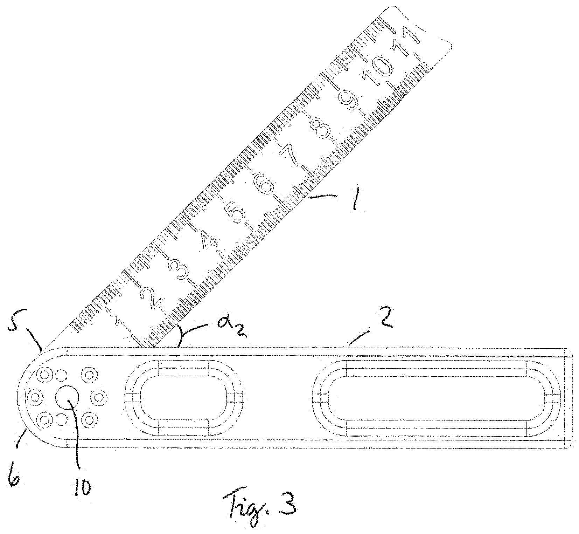

As an example, at most 4 biased means 11, 12/sockets 13, 14 are arranged if the angle α₁ between said measuring part 1 and said handle 2 is to be set at intervals of 90 degrees relative to each other, as seen in figure 1, and that at most 8 biased means 11, 12/sockets 13, 14 are arranged if the angle α₂ between said measuring part 1 and said handle 2 is to be set at intervals of 45 degrees relative to each other, as seen in figure 3.

In the embodiment shown in Figs. 1 to 3 6 biased means 11, 12 and 6/sockets 13, 14 are arranged for setting the angle between said measuring part 1 and said handle 2 in steps of 45 degrees.

Thus, the apparatus according to the invention can be used for setting the angle without any angular play between two elongated parts of a device selected from the group consisting of, but not limited to, a set square, sliding bevel, and folding square.

## Claims

1. An apparatus for alterable accurate setting an angle between a first elongated member (1) and a second elongated member (2), whereby said accurate setting can be repeated several times without any angular play between said elongated members and without effecting said accurate setting, said first and second elongated members (1, 2) having ends (5, 6) which are pivotally connected to each other by a pivot pin (10) so as to form a fulcrum , **characterized in that** the end (5, 6) of one of said first and said second elongated member (1, 2) is provided with at least two biased means (11, 12) adapted to be received in and interengaged with at least two sockets (13, 14) provided at the end (5, 6) of said other of the first and the second elongated member (1, 2), and that a centre point of each of said at least two biased means (11, 12) being displaced +0.05 to +1.0 degrees, preferably +0.1 to +0.5, most preferably about +0.2, relative to an imaginary centre point of each of said at least two biased means (11, 12), and a centre point of each of said at least two sockets (13, 14) being displaced -0.05 to -1.0 degrees, -0.1 to -0.5 degrees, most preferably about -0.2, relative to an imaginary centre point of each of said at least two sockets (13, 14), or vice versa, said imaginary centre points being aligned with each other.

2. The apparatus according to claim 1, **characterized in that** one of the first and the second elongated members (1, 2) being formed with a recess (3) at an end thereof for receiving an end of the other of the first and the second elongated members (1, 2), and that each of said biased means (11, 12) has at least a semispherically formed end adapted to be received in the respective socket (13, 14) having a corresponding shape.

3. The apparatus according to claim 2, **characterized in that** each of said biased means (11, 12) is formed as a sphere and each being biased by a spring (16) into the respective socket (13, 14).

4. The apparatus according to claim 2, **characterized in that** a depth of the socket (13, 14) being in the interval of 10% to 40% of a diameter of said at least semispherically formed end of each of said biased means (11, 12).

5. The apparatus according to any one of the preceding claims, **characterized in that** at most 4 biased means (11, 12)/sockets (13, 14) are arranged whereby the angle between said first elongated member (1) and said second elongated member (2) can be set at intervals of 90 degrees relative to each other, and that at most 8 biased means (11, 12)/sockets (13, 14) are arranged whereby the angle between said first elongated member (1) and said second elongated member (2) can be set at intervals of 45 degrees relative to each other.

6. The apparatus according to any one of the preceding claims used for setting the angle of a device selected from the group consisting of a set square, sliding bevel, and folding square.
